# EUROPEAN PATENT APPLICATION

(11) **EP 1 408 510 A2**
(43) Date of publication of application: **14.04.2004**
(21) Application number: 03010801.3
(22) Date of filing: 14.05.2003
(51) Int. Cl.: G11C 11/406, G11C 11/4074

(54) **Memory control apparatus, method and program**

(30) Priority: 17.05.2002 JP 2002142640
(71) Applicant: MATSUSHITA ELECTRIC INDUSTRIAL CO., LTD., Kadoma-shi, Osaka 571-8501 (JP)
(72) Inventor: Kubota, Kenichi, Yokohama-shi, Kanagawa-ken 230-0075 (JP); Waki, Hiroyuki, Ikoma-shi, Nara-ken 630-0201 (JP); Soeda, Junichiro, Katano-shi, Osaka-fu 576-0021 (JP); Mizuyama, Masashige, Neyagawa-shi, Osaka-fu 572-0019 (JP)
(74) Representative: Gassner, Wolfgang, Dr.

(57) **Abstract**

The present invention provides a memory control apparatus capable of efficiently reducing power consumption. The memory control apparatus controls power consumption for refreshing on a unit region-by-unit region basis. A determination section (22) receives an allocate request from an application and determines whether or not data requires refreshing based on the allocate request. Next, a memory allocating section (23) allocates a memory region within a first memory bank to data having been determined to require refreshing and allocates a memory region within a second memory bank to data having been determined to require no refreshing. A memory control section (25) specifies the first memory bank as a refresh region for refreshing and specifies the second memory region as a non-refresh region which is prevented from being refreshed.

## Description

### BACKGROUND OF THE INVENTION

### Field of the Invention

The present invention relates to a memory control apparatus, and more particularly to a memory control apparatus for controlling power consumption of a memory which requires regular power supply.

### Description of the Background Art

Conventionally, in order to store data processed by an application, i.e., software, a data processing apparatus, as typified by a personal computer, mainly uses a DRAM (Dynamic RAM) , an SDRAM (Synchronous DRAM) which operates at higher speed, etc. These memories are configured to convert data into an electric charge so as to be held in a capacitor, and therefore require processing for recharging the capacitor so as to hold data, i.e., regular power supply (refreshing) is essential. Thus, power consumption of these memories is high as compared to an SRAM (Static RAM) which requires no refreshing.

Accordingly, in general, power consumption of a memory is conventionally controlled via a hardware mechanism. Further, there exists a memory control apparatus for controlling power consumption of the memory by using software. Such an apparatus omits refreshing some of a plurality of memory banks in the memory so that power consumption can be suppressed as compared to the case where all the memory banks are refreshed. More specifically, the memory control apparatus manages the status of memory region allocation to programs and memory region deallocation therefrom. By omitting the refreshing of unassigned memory banks, power consumption is reduced. It is also conceivable that, in the above-mentioned memory control apparatus, data is compressed or saved in a secondary storage so as to have an unassigned memory bank which requires no refreshing.

On the other hand, in recent years, an OS (Operating System) which realizes a program executable environment is mounted not only on a personal computer, etc., but also on an information terminal for household use. A power saving measure is essential for such an information terminal for household use, and therefore power saving of the above-mentioned memories is highly desired.

As described above, the conventional memory control apparatus controls whether or not to refresh depending on whether or not the memory is used. Therefore, when the ratio of used regions in the memory is high, refreshing of only few regions is omitted. Further, when most regions of the memory are used, refreshing of almost no region is omitted. Thus, depending on the percentage of memory in use, the conventional memory control apparatus may hardly achieve an effect of power saving. Accordingly, in some cases, a data processing apparatus using a conventional memory control apparatus cannot efficiently reduce power consumption.

It is conceivable that, in the conventional memory control apparatus, power consumption is further reduced by moving a storage location of data stored in the memory. Specifically, data stored in a certain memory bank (a movement source memory bank) is moved to an empty memory region in another memory bank such that the movement source memory bank is brought into an unassigned state. Accordingly, the need for refreshing the movement source memory bank is eliminated, and therefore power consumption can be further reduced. In the case where data is moved, however, it is necessary to notify an application, which uses the moved data, that the data has been moved. That is, in the case of moving data in order to further reduce power consumption, it is necessary to provide the application with such notification each time data is moved. Moreover, the application is required to perform a process for changing information about the storage location of the data stored in the memory. Since more processes are required for moving data, there are difficulties in data movement.

### SUMMARY OF THE INVENTION

Therefore, an object of the present invention is to provide a memory control apparatus capable of efficiently reducing power consumption.

Another object of the present invention is to provide a memory control method for use in the same apparatus.

Still another object of the present invention is to provide a program for allowing a computer to execute the same.

The present invention has the following features to attain the objects mentioned above.

A first aspect of the present invention is directed to a memory control apparatus for controlling a power supply for refreshing a memory, in which a storage region is divided into a plurality of unit regions, on a unit region-by-unit region basis, the apparatus comprising: a determination section for receiving an allocate request for allocating a memory region for storing data in the memory from an application and determining whether or not the data requires refreshing based on the allocate request; a memory allocating section for allocating a memory region in a first unit region to data having been determined to require refreshing and allocating a memory region in a second unit region which is different from the first unit region to data having been determined to require no refreshing; and a memory control section for specifying the first unit region as a refresh region for refreshing and specifying the second unit region as a non-refresh region which is prevented from being refreshed.

In the first aspect, data which requires refreshing among data stored in the memory is stored in the refresh region. Power for refreshing is supplied to the refresh region but not to the non-refresh region. In this manner, the data to be stored in the memory is assigned to either the refresh region or the non-refresh region in accordance with the purpose of data storage . Accordingly, even when all the regions in the memory are used, power for refreshing is not consumed by regions in which data which requires no refreshing is stored. Thus, according to the first aspect, it is possible to efficiently reduce power consumption regardless of the percentage of the memory in use.

According to a second aspect of the present invention, the memory allocating section specifies as the first unit region a unit region which has been specified as the refresh region at a last refresh and specifies as the second unit region a unit region which has been specified as the non-refresh region at the last refresh.

In the second aspect, it is not necessary to specify each unit region as either the refresh region or the non-refresh region each time refreshing is performed.

According to a third aspect of the present invention, the memory control apparatus further comprises a data moving section for moving a data storage location of data which is stored in the memory, wherein in the case where the memory region is allocated to the data having been determined to require no refreshing, when there is no empty space in the non-refresh region, the memory allocating section specifies the unit region included in the refresh region as the second unit region, and wherein in the case where the memory region within the unit region included in the refresh region is allocated to the data having been determined to require no refreshing, the data moving section moves the data already stored in the unit region to another unit region in the refresh region.

In the third aspect, in the case where the data which requires no refreshing is stored in the refresh region for the reason that there is no empty space in the non-refresh region, other data (which require refreshing) within the unit region in which the data which requires no refreshing are moved to another unit region. Accordingly, only the data which requires no refreshing is stored in said unit region. As a result, the need for refreshing said unit region is eliminated. Thus, according to the third aspect, it is possible to further reduce power consumption caused by refreshing as compared to the case where no data is moved.

According to a fourth aspect of the present invention, the memory control apparatus further comprises a memory information storing section for storing memory information in which a logical address for indicating the data storage location to the application is associated with a physical address indicating an actual data storage location in the memory with respect to each data stored in the memory, wherein when the data is moved, the data moving section changes details of the memory information with respect to the physical address of the data and a correspondence between the physical address and the logical address.

In the fourth aspect, even when data is moved, a logical address of the data is not changed. Accordingly, an application is not influenced by the data movement, and therefore it is not necessary to change the settings of the application even when the data is moved. Since it is not necessary to prepare an application in consideration of such a change, it is possible to realize a memory control apparatus applicable to more applications.

According to a fifth aspect of the present invention, the data moving section is realized when a CPU executes a prescribed program operation, the data moving section moving the data storage location when an amount of processing performed by the CPU per unit time is less than a prescribed amount.

In the fifth aspect, it is possible to average processing load on the memory control apparatus, and therefore power consumed by the memory control apparatus can be reduced.

According to a sixth aspect of the present invention, a processing priority is set among a plurality of applications capable of generating an allocate request, and the data moving section moves the data storage location when the application having generated the allocate request has a lower processing priority than other applications.

In the sixth aspect, it is possible to average processing load on the memory control apparatus, and therefore power consumed by the memory control apparatus can be reduced.

According to a seventh aspect of the present invention, the determination section stores information indicating a correspondence between the allocate request and information, which indicates whether or not data stored in the memory region allocated by the allocate request requires refreshing, and determines whether or not the data requires refreshing with reference to the information indicating the correspondence.

In the seventh aspect, whether or not data requires refreshing can be readily determined.

According to an eighth aspect of the present invention, the determination section determines whether or not the data requires refreshing, depending on whether or not a time period for which data is required to be held is longer than a refresh cycle of the memory.

In the eighth aspect, whether or not data requires refreshing can be correctly determined.

A ninth aspect of the present invention is directed to a memory control apparatus for controlling a power supply for refreshing a memory, in which a storage region is divided into a plurality of unit regions, on a unit region-by-unit region basis, the apparatus comprising: a memory information storing section for storing memory information in which a logical address for indicating a data storage location to an application is associated with a physical address indicating an actual data storage location in the memory with respect to each data stored in the memory, a data moving section for moving data storage locations of all data stored in at least one unit region of the memory to another unit region in which data is stored and changing details of the memory information with respect to physical addresses of moved data and a correspondence between the physical addresses and logical addresses; and a memory control section for specifying, based on the memory information, the unit region in which data is stored as a refresh region for refreshing and the unit region in which no data is stored as a non-refresh region which is prevented from being refreshed.

In the ninth aspect, by moving data stored in a certain unit region to another unit region, power for refreshing can be stopped from being supplied to the source region from which the data is moved. Accordingly, it is possible to efficiently reduce power consumption. Moreover, according to the ninth aspect, even when data is moved, a logical address of the data is not changed. Accordingly, an application is not influenced by data movement, and therefore it is not necessary to change the settings of the application even when the data is moved. There is no need for performing a process in conjunction with, for example, the change of the settings of the application, and therefore a data moving process can be readily performed. Moreover, since it is not necessary to prepare an application in consideration of such a change, it is possible to realize a memory control apparatus applicable to more applications.

A tenth aspect of the present invention is directed to a memory control method for controlling a power supply for refreshing a memory, in which a storage region is divided into a plurality of unit regions, on a unit region-by-unit region basis, the method comprising the steps of: receiving an allocate request for allocating a memory region for storing data in the memory from an application and determining whether or not the data requires refreshing based on the allocate request; allocating a memory region within a first unit region to data having been determined to require refreshing and a memory region within a second unit region which is different from the first unit region to data having been determined to require no refreshing; and specifying the first unit region as a refresh region for refreshing and specifying the second unit region as a non-refresh region which is prevented from being refreshed.

An eleventh aspect of the present invention is directed to a memory control method for controlling a power supply for refreshing a memory, in which a storage region is divided into a plurality of unit regions, on a unit region-by-unit region basis, the method comprising the steps of: prestoring memory information in which a logical address for indicating a data storage location to an application is associated with a physical address indicating an actual data storage location in the memory with respect to each data stored in the memory; moving all data stored in at least one unit region of the memory to another unit region in which data is stored and changing details of the memory information with respect to physical addresses of moved data and a correspondence between the physical addresses and logical addresses; and specifying, based on the memory information, the unit region in which data is stored as a refresh region for refreshing and the unit region in which no data is stored as a non-refresh region which is prevented from being refreshed.

A twelfth aspect of the present invention is directed to a computer readable program for allowing a computer including a memory in which a storage region is divided into a plurality of unit regions to execute a memory control method of the tenth or eleventh aspect.

These and other objects, features, aspects and advantages of the present invention will become more apparent from the following detailed description of the present invention when taken in conjunction with the accompanying drawings.

### BRIEF DESCRIPTION OF THE DRAWINGS

FIG. 1 is a diagram illustrating an exemplary hardware configuration of a memory control apparatus according to a first embodiment of the present invention;
FIG. 2 is a block diagram illustrating a functional configuration of the memory control apparatus according to the first embodiment of the present invention;
FIG. 3 is a diagram illustrating an example of memory information according to the first embodiment of the present invention;
FIG. 4 is a flowchart illustrating the flow of a procedure performed by the memory control apparatus according to the first embodiment of the present invention;
FIG. 5 is a block diagram illustrating a functional configuration of a memory control apparatus according to a second embodiment of the present invention;
FIG. 6 is a flowchart illustrating the flow of a procedure performed by the memory control apparatus according to the second embodiment of the present invention;
FIG. 7 is a diagram illustrating the contents of memory information before data movement according to the second embodiment of the present invention;
FIG. 8 is a diagram illustrating the contents of memory information after the data movement according to the second embodiment of the present invention;
FIG. 9 is a block diagram of a memory control apparatus according to a third embodiment of the present invention;
FIG. 10 is a flowchart illustrating the flow of a procedure performed by the memory control apparatus according to the third embodiment of the present invention;
FIG. 11 is a diagram illustrating the contents of memory information before data movement according to the third embodiment of the present invention; and
FIG. 12 is a diagram illustrating the contents of memory information after the data movement according to the third embodiment of the present invention.

### DESCRIPTION OF THE PREFERRED EMBODIMENTS

### (First Embodiment)

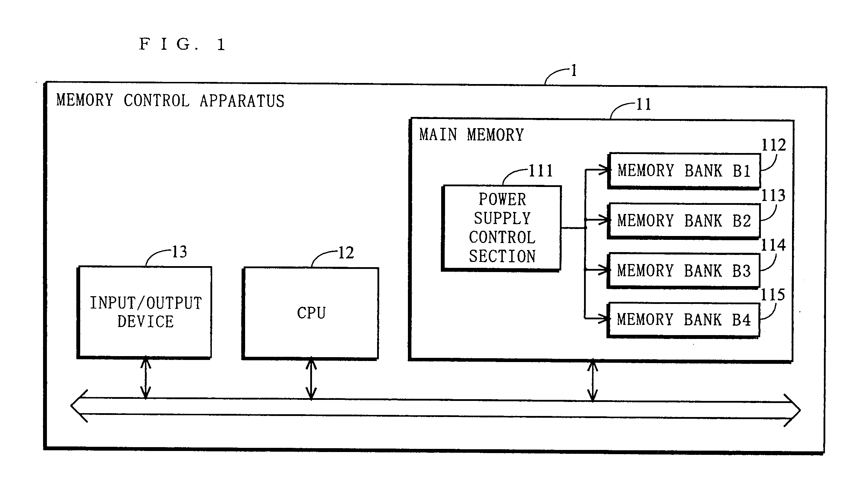

Firstly, a memory control apparatus according to a first embodiment will be described. FIG. 1 is a diagram illustrating an exemplary hardware configuration of a memory control apparatus 1 according to the first embodiment of the present invention. In the memory control apparatus 1 illustrated in FIG. 1, a main memory 11 for storing data, a CPU 12 for performing a process for executing a program, and an input/output device 13, such as a screen, keys, or the like, are connected to each other via a bus. The main memory 11 is a memory, such as an SDRAM, which requires refreshing at prescribed time intervals, and is used for storing data handled in the process for executing a program (an application) in the CPU 12. As illustrated in FIG. 1, the main memory 11 includes a power supply control section 111 and a plurality of memory banks 112 to 115. For simplification of description, the present embodiment will be described below with respect to the case where the number of memory banks is four.

In the present embodiment, the main memory 11 is controlled by the CPU 12 such that power supply for refreshing the memory banks 112 to 115 is controlled on a memory bank-by-memory bank basis. Specifically, the CPU 12 provides the main memory 11 with an instruction as to whether or not to perform refreshing with respect to each of the memory banks 112 to 115. The power supply control section 111 refreshes each of the memory banks 112 to 115 as a unit in accordance with the instruction from the CPU 12. In the following description, a cycle of refreshing, i.e., a time period from the last refresh to the next refresh, is referred to as the "refresh cycle". Further, among memory regions of the main memory 11 (the memory banks 112 to 115), a region which is refreshed (i.e., a region to which power is supplied by the power supply control section 111) is referred to as the "refresh region" and a region which is not refreshed (to which no power is supplied by the power supply control section 111) is referred to as the "non-refresh region".

Note that, in other embodiments, the CPU 12 may be configured to have an internal memory (e.g., an SRAM) or a cache included therein. In such a case, the cache, the internal memory, or the main memory 11 (listed in decreasing order of reference speed) is selected as a recording medium for storing data processed by the CPU 12 depending on degrees of required reference speed.

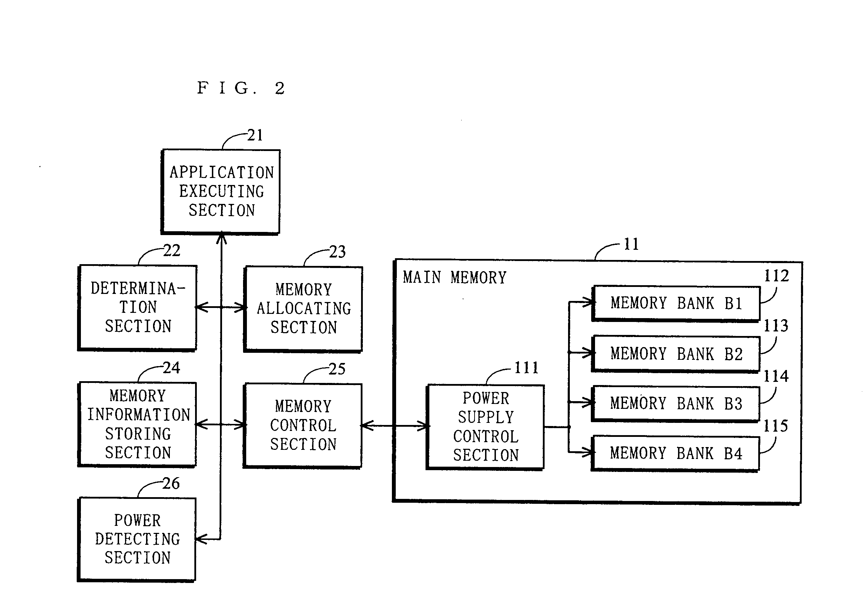

FIG. 2 is a block diagram illustrating a functional configuration of the memory control apparatus 1 according to the first embodiment of the present invention. In FIG. 2, for the purpose of controlling the main memory 11, the memory control apparatus 1 is configured to include an application executing section 21, a determination section 22, a memory allocating section 23, a memory information storing section 24, a memory control section 25, and a power detecting section 26. These components are realized when the CPU 12 executes prescribed program operations . More typically, the determination section 22, the memory allocating section 23, the memory information storing section 24, and the memory control section 25 are realized as part of the function of an OS incorporated into the memory control apparatus 1.

An application executing section 21 executes various applications stored in the memory control apparatus 1. Data is written to the main memory 11 when an application is executed. When writing the data to the main memory 11, the application executed by the application executing section 21 creates an allocate request for storing the data in the main memory 11. The allocate request is provided to allocate a memory region in the main memory 11 in order to store data therein. The allocate request may be intended not only for allocating the memory region but also for writing data to the allocated memory region. In the following description, data written to the memory region in the main memory 11 which is allocated in accordance with the allocate request is referred to as the "target data".

The determination section 22 receives the allocate request from an application and determines whether or not target data associated with the received allocate request requires refreshing. In the first embodiment, the wording "whether or not data requires refreshing" means whether or not a required holding time period in the main memory 11 of the data (i.e., a time period for which the data is required to be held in the main memory 11) is longer than a refresh cycle. In this context, the required holding time period refers to a time period from the completion of data storage to the completion of data reading. Specifically, data which requires no refreshing has a required holding time period which is shorted than the refresh cycle. Since such data is not required to be held for a time period exceeding the refresh cycle, a memory bank which stores only such data requires no refreshing. The memory control apparatus 1 according to the present embodiment distinguishes between data which requires refreshing and data which requires no refreshing and writes those data to respective different memory banks. By performing control so as not to refresh the memory bank in which data which requires no refreshing is written, it is possible to reduce power consumption caused by refreshing.

Note that, in the present embodiment, the "data which requires no refreshing" is conditional on "having a required holding time period which is shorter than the refresh cycle". In other embodiments, the "data which requires no refreshing" may be conditional on "not being referenced by an application after having been read" as well as "having a required holding time period which is shorter than the refresh cycle".

The determination section 22 performs determination as to whether or not refreshing is required based on the above-mentioned allocate request. Specifically, the determination as to whether or not refreshing is required is previously associated with each of various allocate requests from applications. Typically, the determination section 22 prepares a table in which each of various allocate requests is associated with information indicating whether or not refreshing is required. When the determination section 22 receives an allocate request from an application, whether or not refreshing is required is determined with reference to the table. In general, the refresh cycle is on the order of 10 to 100 microseconds. When the CPU 12 operates at a speed of tens of MHz, the refresh cycle corresponds to a limited time period equivalent to several hundreds of CPU cycles. Therefore, an allocate request for processing by which data storage and data reading are completed within this limited time period is associated with the determination that no refreshing is required.

For example, in the case where the allocate request from the application includes information indicating an output destination of the target data, whether or not refreshing is required is determined based on the information. For example, in the case where an allocate request for writing the target data to a hard disk is provided, since writing to hard disk is time consuming, a time period for which the target data is kept stored in the main memory 11 is relatively long. Therefore, such an allocate request is associated with the determination that refreshing is required. On the other hand, in the case where an allocate request for sending the target data over LAN or the like using high-speed communication lines, the time period for which the target data is kept stored in the main memory 11 may be short. Accordingly, such an allocate request is associated with the determination that no refreshing is required. As described above, a piece of information included in the allocate request can be used for determining whether refreshing is required. Information indicating a purpose of using memory, such as an output destination of the target data, is referred to as the "purpose information".

Data used for transaction guaranteeing processing is an example of the target data which requires no refreshing. The term "transaction guarantee processing" as used herein corresponds to, for example, the following process. In the case where power supply to an apparatus is suddenly disconnected, data associated with a process performed immediately before disconnection is urgently saved within, for example, 10 microseconds in order to guarantee system consistency before and after restart of the apparatus. Data used for a process which is guaranteed to complete in a short period of time, e.g., a timer process, an interrupt handler, or the like, is also considered as the target data which requires no refreshing.

In the case where the CPU 12 includes a cache or an internal memory, data may be temporarily saved in the main memory 11 before being stored in the cache or the internal memory. Such data is also considered as the target data which requires no refreshing. In a process for superimposing a plurality of part data over the entire image data so as to display an image, each part data is also considered as data which requires no refreshing. Further, in the case of processing dynamic image data, data indicating the percentage of change from the immediately previous image is also considered as the data which requires no refreshing.

In FIG. 2, the memory allocating section 23 allocates a memory region in memory banks, which belongs in the refresh region, to target data which is determined to require refreshing by the determination section 22. On the other hand, the memory allocating section 23 allocates a memory region in the memory banks, which belongs in the non-refresh region, to target data which is determined to require no refreshing. That is, the memory allocating section 23 reserves for the target data a memory region in the memory banks, which belongs in either the refresh region or the non-refresh region based on a determination result of the determination section 22. Note that memory information stored in the memory information storing section 24 indicates which region(s) in the memory banks 112 to 115 of the main memory 11 belongs (belong) in the refresh region or the non-refresh region.

The following description provides the details of the memory information which is stored in the memory information storing section 24 and indicates which region(s) belongs (belong) in the refresh region or the non-refresh region with respect to the memory banks 112 to 115 of the main memory 11.

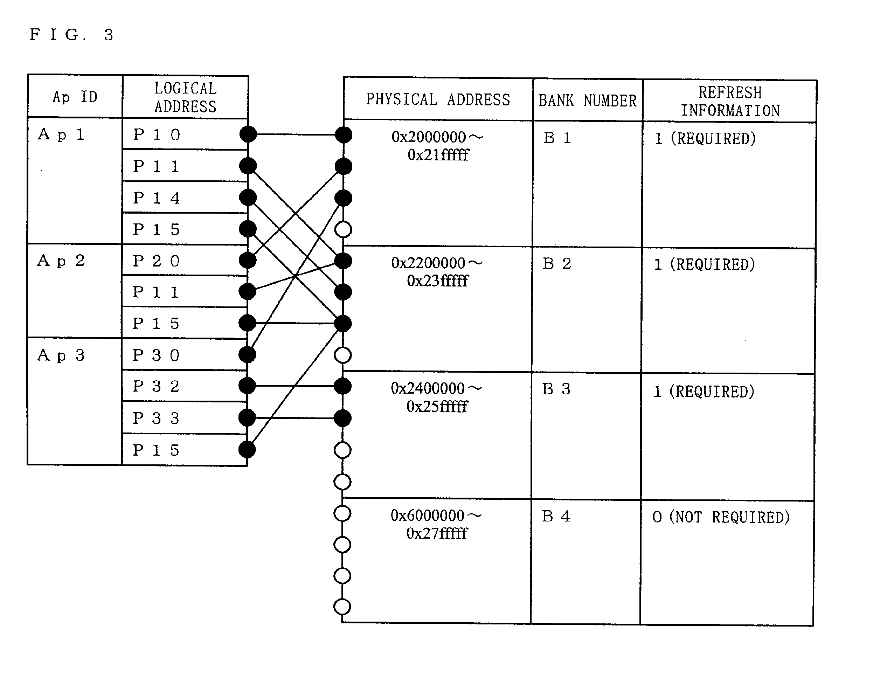

FIG. 3 is a diagram illustrating an example of memory information according to the first embodiment of the present invention. As shown in FIG. 3, the memory information includes application IDs (illustrated as the "ApID" in FIG. 3), logical addresses, physical addresses, bank numbers, and refresh information. The application IDs are information for identifying various applications executed by the application executing section 21. The bank numbers are information for identifying four memory banks. The refresh information indicates whether or not to refresh the memory banks. In FIG. 3, the refresh information is represented by "1", which indicates that refreshing is performed, and "0", which indicates no refreshing is performed.

The logical addresses are information for indicating storage locations of data in the main memory 11 to an application. That is , the application manages the storage locations of data by logical addresses. Each logical address is represented by, for example, a page number, such as "P10" or "P11". The physical addresses are information for indicating actual storage locations of data in the main memory 11. In the first embodiment, the logical addresses are included in the memory information so as to be associated with respective physical addresses. With this configuration, even when a data storage location is moved within the main memory 11, i.e., even when the physical address of the data is changed, no logical address is changed. That is, even when a physical address of certain data is changed, correspondence between the physical addresses and the logical addresses is merely required to be changed, and therefore it is not necessary to change the logical address of that data. Since applications manage the data storage locations by the logical addresses, the configuration in which the logical addresses and the physical addresses are associated with each other does not cause the applications to be influenced even when the storage locations of data in the main memory 11 are changed.

The memory control section 25 provides the power supply control section 111 with an instruction as to which memory bank to refresh. That is, each of the memory banks 112 to 115 is specified as belonging in either the refresh region or the non-refresh region. Specifically, a memory bank including a memory region allocated to the target data which requires refreshing is specified as belonging in the refresh region. On the other hand, a memory bank including a memory region allocated to the target data which requires no refreshing is specified as belonging in the non-refresh region. Further, regarding the change from the refresh region to the non-refresh region or the change from the non-refresh region to the refresh region, the memory control section 25 controls the main memory 11 such that each of the memory banks 112 to 115 is treated as a unit. Additionally, the memory control section 25 writes data, which is passed from the applications, to the main memory 11.

The power detecting section 26 detects whether power supplied to the memory control apparatus 1 is from batteries provided in the memory control apparatus 1 or from a power source provided outside the memory control apparatus 1 (e.g., an AC adaptor).

An operation of the memory control apparatus 1 according to the first embodiment will now be described. Specifically, the operation of the memory control apparatus 1 is described with respect to the case where the above-mentioned allocate request for storing data in the main memory 11 is created by an application, and a memory region for storing the data is allocated based on the allocate request.

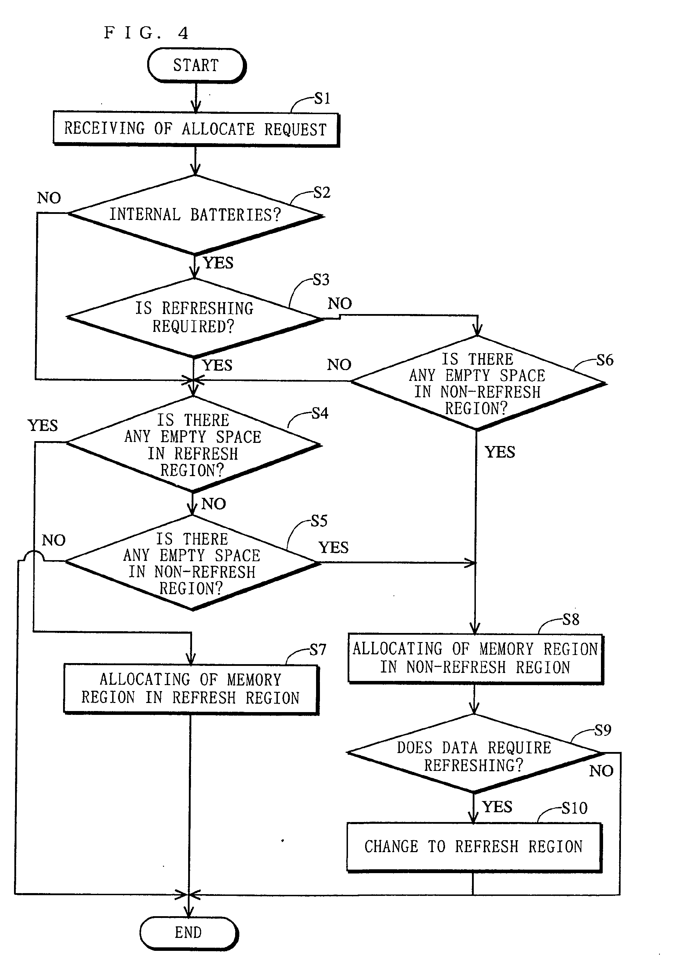

FIG. 4 is a flowchart illustrating the flow of a procedure performed by the memory control apparatus 1 according to the first embodiment of the present invention. Firstly, at step S1, the determination section 22 receives the above-mentioned allocate request from an application. At subsequent step S2, the power detecting section 26 determines whether the power currently supplied to the memory control apparatus 1 is from batteries provided in the apparatus or from an external power source. As a determination result of step S2, when the power supplied to the memory control apparatus 1 is determined to be from the batteries provided therein, processing of step S3 is performed. Specifically, the determination result of step S2 is passed from the power detecting section 26 to the determination section 22, and the determination section 22 which has received that determination result performs the processing of step S3. On the other hand, as the determination result of step S2, when the power supplied to the memory control apparatus 1 is determined to be from the external power source, processing of step S4 is performed. Specifically, the determination result of step S2 is passed from the power detecting section 26 to the memory allocating section 23, and the memory allocating section 23 which has received that determination result performs the processing of step S4.

In this manner, in the first embodiment, only when the batteries provided in the memory control apparatus 1 are the power supply, the determination of step S3 is performed for suppressing power consumption. In other words, when the external power source supplies the power, there is no great necessity for reducing power consumption, and therefore no processing for suppressing power consumption is performed. In this manner, in the first embodiment, the processing for suppressing power consumption is performed only when it is actually needed. Although the case where step s4 and subsequent steps are performed when the external power source supplies the power is described above, in other embodiments, when the external power source supplies the power, any memory region may be allocated to the target data and all the memory banks 112 to 115 may be specified as belonging in the refresh region.

At step S3, the determination section 22 determines whether or not the target data requires refreshing based on the allocate request received at step S1 Specifically, as described above, the determination is performed with reference to the table in which allocate requests are associated with information indicating whether or not refreshing is required. The determination section 22 passes a determination result of step S3 to the memory allocating section 23. The memory allocating section 23 performs processing of step S4 or S6 in accordance with the determination result. Specifically, when the target data is determined to require refreshing at step S3, processing of step S4 is performed. On the other hand, when the target data is determined to require no refreshing at step S3, processing of step S6 is performed.

At step S4, the memory allocating section 23 determines whether or not there is any empty space in the refresh region. As a result of this determination, when there is an empty space in the refresh region, i.e., when there is an empty space in the refresh region which is larger than a region having a size required for storing the target data, processing of step S7 is performed. On the other hand, there is no empty space, i.e., when the refresh region lacks for an empty region having a size required for storing the target data, the processing of step S5 is performed. Note that the determination as to whether or not there is any empty space in the refresh region can be performed with reference to the memory information stored in the memory information storing section 24.

At step S5, the memory allocating section 23 determines whether or not there is any empty space in the non-refresh region. The determinations of steps S4 and S5 are performed in a similar manner except that these determinations are performed with respect to either the refresh region or the non-refresh region. As a result of the determination of step S5, when there is an empty space in the non-refresh region, processing of step S8 is performed. Specifically, at step S5, the case where there is no empty space in the non-refresh region corresponds to the case where there is no sufficient empty space to store the target data in either the refresh region or the non-refresh region. Therefore, in such a case, it is determined that the memory allocation fails, and thus the procedure is ended.

At step 56, the memory allocating section 23 determines whether or not there is any empty space in the non-refresh region. The determination is performed in a similar manner to that of step S5. As a result of this determination, when there is an empty space in the non-refresh region, the processing of step S8 is performed. On the other hand, when there is no empty space in the non-refresh region, the processing of step S4 is performed.

At step S7, the memory allocating section 23 allocates a memory in the refresh region to the target data. That is, a memory region for storing the target data is reserved within the refresh region. At this point, the memory in the refresh region is allocated to the target data in the following two cases: (1) the target data requires refreshing (Yes at step S3) and there is an empty space in the refresh region (Yes at step S4); and (2) the target data requires no refreshing (No at step S3) and there is no empty space in the non-refresh region (No at step S6) but in the refresh region (Yes at step S4). Note that when the processing of step S7 is ended, the procedure illustrated in FIG. 4 is ended.

At step S8, the memory allocating section 23 allocates a memory in the non-refresh region to the target data. That is, a memory region for storing the target data is reserved within the non-refresh region. At this point, the memory in the non-refresh region is allocated to the target data in the following two cases: (3) the target data requires no refreshing (No at step S3) and there is an empty space in the non-refresh region (Yes at step S6); and (4) the target data requires refreshing (Yes at step S3) and there is no empty space in the refresh region (No at step S4) and only the non-refresh region has an empty space (Yes at step S5).

Following step S8, at step S9, the memory allocating section 23 determines whether or not the target data requires refreshing. As described above, in the above-described cases (3) and (4), the processing of step S8 is performed. The determination of step 9 is performed for determining whether the current status corresponds to the above case (3) or (4). Specifically, in the case where the determination result of step S9 is "Yes" (i.e., "Yes" at step S3; in the above case (3)), the target data is determined to require refreshing, and processing of step S10 is performed. On the other hand, in the case where the determination result of step S9 is "No" (i.e., "No" at step S3; in the above case (4)), the target data is determined to require no refreshing, and thus the procedure illustrated in FIG. 4 is ended.

At step S10, the memory control section 25 executes a change such that a memory bank including the memory region allocated at step S8 is specified as the refresh region. As is apparent from the above step S9, when the processing of step S10 is performed, the target data requires refreshing. However, if the memory control section 25 does not execute such a change at step S10 as described above, the data which requires refreshing has to be stored in the non-refresh region. Therefore, in order to store the data, which requires refreshing, in the refresh region, the non-refresh region is respecified as the refresh region. This allows the data which requires refreshing to be securely held. Note that in order to reflect the change from the non-refresh region to the refresh region at step S10, the memory control section 25 updates the memory information stored in the memory information storing section 24. When the processing of step S10 is completed, the procedure illustrated in FIG. 4 is ended.

Note that the processings of steps S9 and S10 are not necessarily performed immediately after the allocation of the memory region (step S8). For example, these processings may be performed immediately before the target data is actually written to the allocated memory region.

As described above, according to the first embodiment, the target data is classified into two types, i.e., target data to be stored in the refresh region and target data to be stored in the non-refresh region, depending on whether or not refreshing is required. Accordingly, by refreshing only a memory bank(s) specified as belonging in the refresh region, it is possible to refresh only data which requires refreshing, thereby efficiently reducing the power required for refreshing.

Further, according to the first embodiment, whether or not refreshing is required is determined based on the contents of the allocate request. Specifically, whether or not refreshing is required is determined in accordance with the purpose of writing data to the main memory 11. Therefore, it can be said that, according to the first embodiment, it is possible to distinguish whether data should be temporarily stored or permanently held in accordance with the purpose of writing the data to the main memory 11. Thus, by refreshing only the data which requires refreshing and should be permanently held, it is possible to reduce power consumption.

Even when special settings are not made on an application itself, the present invention can still be applicable to the first embodiment by realizing the determination section 22, the memory allocating section 23, the memory information storing section 24, and the memory control section 25 as functions of the OS. That is, the present invention can be applicable regardless of functions of the application. Therefore, the present invention can be easily applied even when an application of one apparatus to which reduction in power consumption is not substantially important is ported to another apparatus which requires reduction in power consumption.

In the above description, although the information indicating an output destination of the target data is used as an example of the purpose information included in the allocate request, the present invention is not limited to this. For example, information indicating whether data should be written to the refresh region or the non-refresh region may be included in the allocate request as the purpose information. This allows the application to designate whether the data should be written to the refresh region or the non-refresh region.

In addition to the method based on the purpose information, a method which uses at least two different APIs (Application Program Interfaces) maybe used in the determination section 22 to determine whether or not refreshing is required. Specifically, an API for writing data to the refresh region and an API for writing data to the non-refresh region are prepared so as to function together as the determination section 22. When either one of these APIs is selected by the application, whether or not refreshing is required is determined. According to such a method, the application can designate whether data should be written to the refresh region or the non-refresh region. In the case where the APIs are used in the determination section 22 in the abode-described manner, a specialized memory API can be conceived as the API for writing data to the non-refresh region. The specialized memory API refers to, for example, an API for performing a process for writing data only when failure, such as errors, occurs in the application.

Now consider a case where, when the application can designate whether data should be written to the refresh region or the non-refresh region, the application can detect if there is any defect in data stored in the non-refresh region and, if there is, the application can abandon the defect data and restructure the non-refresh region. In such a case, the application can provide designation such that more data is written to the non-refresh region. This further reduces power consumption.

In the first embodiment, timing on which the process for allocating the memory region is performed is not limited. In other embodiments, however, such a process may be performed, for example, on the following timing. For example, when the load on the CPU 12 is low, the process for allocating the memory region may be performed. Alternatively, the process for allocating the memory region may be performed when an application having generated an allocate request has lower processing priority than other applications. In this manner, by causing the CPU 12 to perform processing in a distributed manner, it is possible to average processing load on the memory control apparatus 1, thereby reducing power consumption.

### (Second Embodiment)

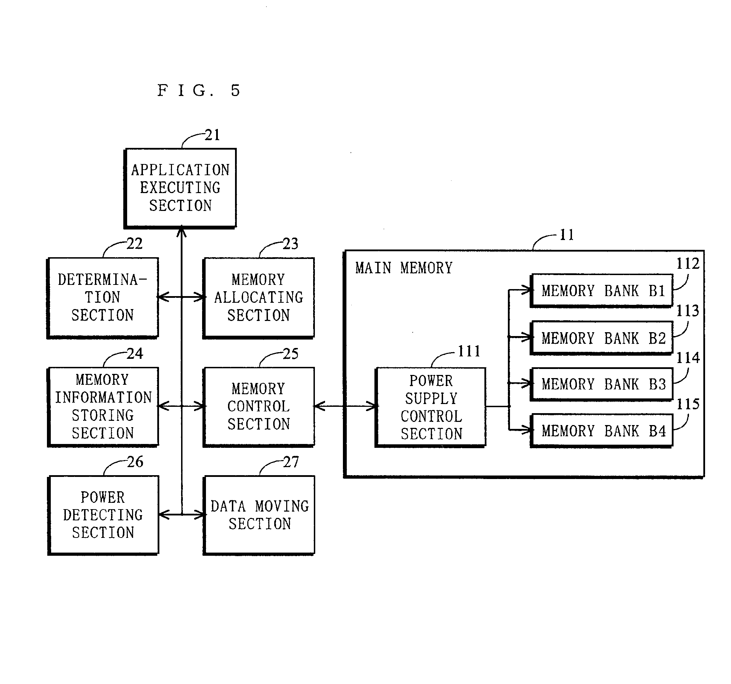

A memory control apparatus according to a second embodiment of the present invention will now be described. FIG. 5 is a block diagram illustrating a functional configuration of the memory control apparatus according to the second embodiment of the present invention. Note that the memory control apparatus according to the second embodiment is similar to the memory control apparatus 1 according to the first embodiment except that the memory control apparatus according to the second embodiment further includes a data moving section 27.

The data moving section 27 moves data stored in a memory bank to another memory bank. In particular, when data which requires no refreshing is stored in a memory bank which belongs in the refresh region, the data moving section 27 moves other data (the data which requires refreshing) written in the same memory bank to another memory bank within the refresh region.

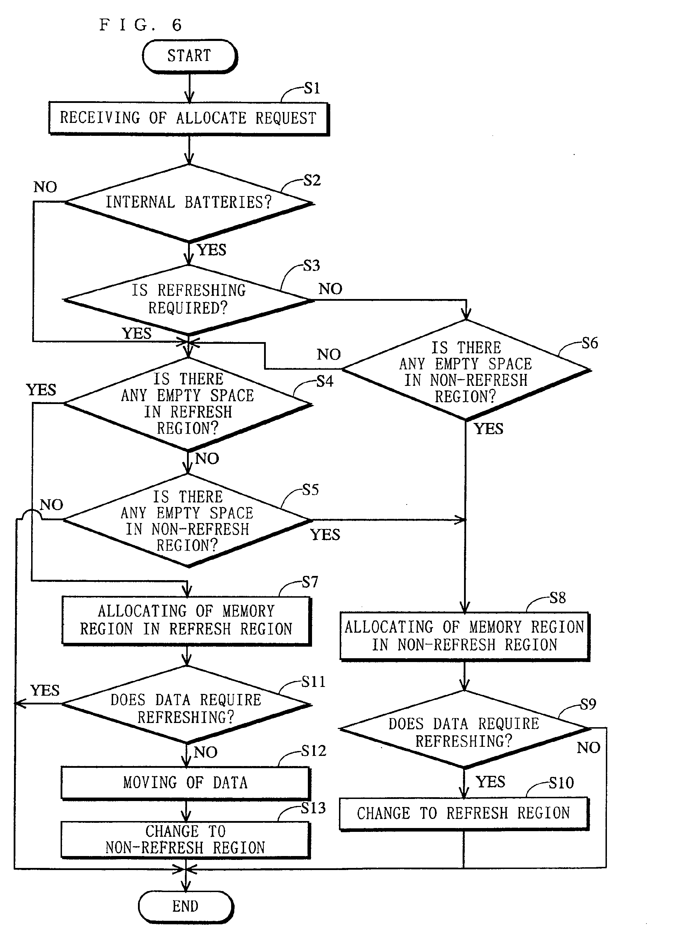

Next, an operation of the memory control apparatus according to the second embodiment of the present invention is described. FIG. 6 is a flowchart illustrating the flow of a procedure performed by the memory control apparatus according to the second embodiment of the present invention. FIG. 6 is different from FIG. 4 in processings of steps S11 to S13. Accordingly, steps S11 to S13 are mainly described below.

In the second embodiment, following step S7, processing of step S11 is performed. Specifically, at step S11, the memory allocating section 23 determines whether or not the target data requires refreshing. The determination is performed based on the determination result of step S3. That is, when the determination result of step S3 is "Yes", the target data is determined to require refreshing. In such a case, the procedure illustrated in FIG. 6 is ended. On the other hand, when the determination result of step S3 is "No", the target data is determined to require no refreshing. In such a case, processing of step S12 is performed.

At step S12, the data moving section 27 moves data. Specifically, data having already been written in a memory bank including a region allocated at step S7 is moved to another memory bank within the refresh region. Thus, only the data to which the memory region is allocated at step S7 (i.e., data which requires no refreshing) is stored in the memory bank including the region allocated at step S7.

Following step S12, at step S13, the memory control section 25 executes a change such that the memory bank including the memory region allocated at step S7 is specified as the non-refresh region. As described above, since the processing of step S12 allows such a memory bank within the non-refresh region to store only the data which requires no refreshing and causes other data to be moved therefrom, no problems would be caused even when the memory bank is changed into the non-refresh region. Thus, power consumption caused by refreshing is reduced. In order to reflect the change from the refresh region to the non-refresh region and data movement of step S13, the memory control section 25 updates the memory information stored in the memory information storing section 24. When the processing of step S13 is ended, the procedure illustrated in FIG. 6 is ended.

As described above, according to the second embodiment, when a memory region in a memory bank included in the refresh region is allocated to the data having been determined to require no refreshing, data having already been stored in such a memory bank is moved to another memory bank within the refresh region. Thus, it is possible to execute a change such that the memory bank including the memory region allocated to the data having been determined to require no refreshing belongs in the non-refresh region. Accordingly, it is possible to increase the number of memory banks included in the non-refresh region, thereby further reducing power consumption caused by refreshing.

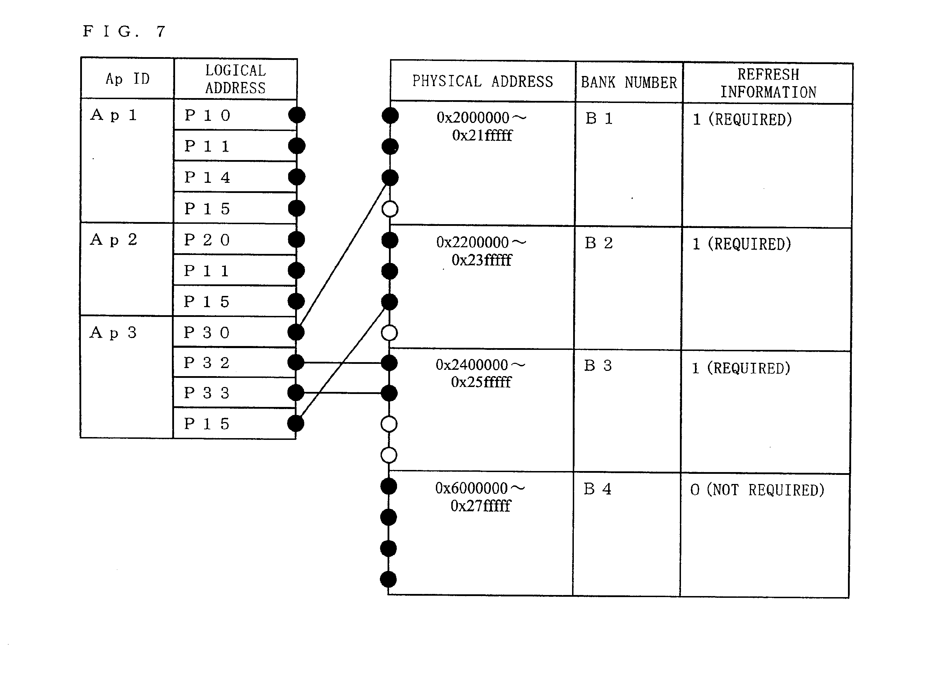

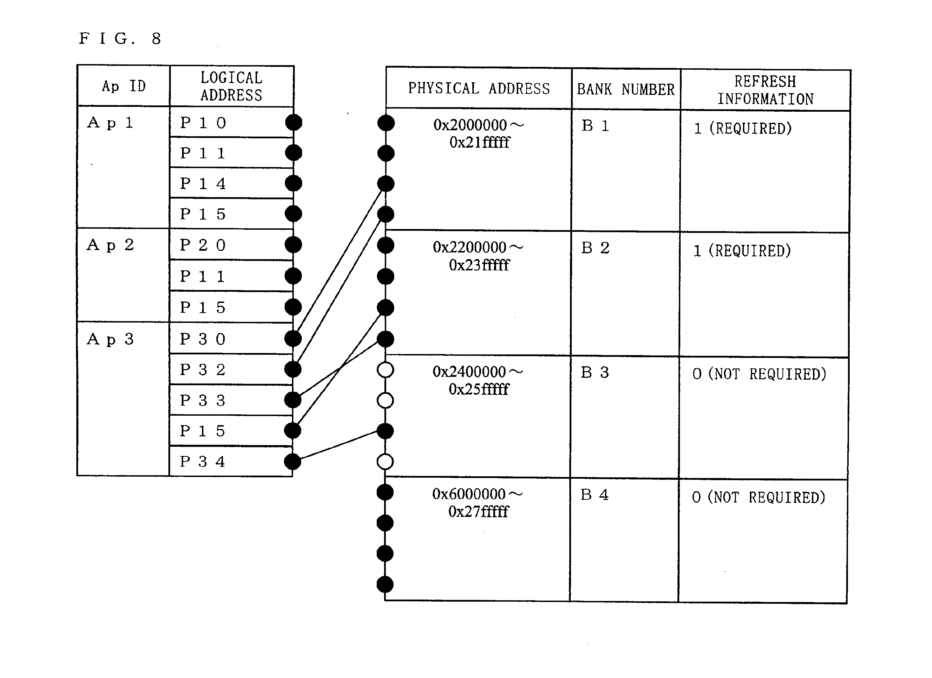

Next, a specific example where data is moved since there is no empty space in the non-refresh region is described. FIG. 7 is a diagram illustrating the contents of memory information before data movement. Note that, in FIG. 7, in order to realize easy viewing of the figure, lines indicating correspondence between logical addresses and physical addresses are omitted with respect to data for applications other than the "Ap3" application. Further, in the figure, black dots represent memory regions in which data is stored, and white dots represent memory regions in which data is not stored. Furthermore, in FIG. 7, the memory bank 115 having bank number B4 which is a non-refresh region does not have any empty space. A case where new data which requires no refreshing (its logical address is denoted by P34 in FIG. 8) is written by the Ap3 application under the state as described above is described.

FIG. 8 is a diagram illustrating the contents of the memory information after data movement. In the state illustrated in FIG. 7, there is no empty space in the non-refresh region, and therefore, firstly, a memory region within the refresh region is allocated to the new data (step S7 of FIG. 6). In this case, the new data is assigned to the memory bank 114 having bank number B3.

As a result that the new data is assigned to the memory bank 114 having bank number B3, both the data which requires refreshing and the data which requires no refreshing are stored in the memory bank 114 (note that, in the first embodiment, data is held in this state) . In the second embodiment, data indicated by page numbers P32 and P33 (data which requires refreshing) are moved to other memory banks within the refresh region (step S12 of FIG. 6). In this case, the data indicated by page number P32, is moved to the memory bank 112 having bank number B1 and the data indicated by page number P32 is moved to the memory bank 113 having bank number B2. Thus, the memory bank 114 stores only the data having page number P34 which requires no refreshing. For this reason, the memory bank 114 is specified as the non-refresh region (step S13 of FIG. 6).

As described above, according to the first and second embodiments, among data stored in the main memory 11, only the data which requires refreshing is stored in the refresh region. Power for refreshing is supplied to the refresh region but not to the non-refresh region. Therefore, even when all regions of the main memory 11 are used, the power for refreshing is not consumed by regions in which data which requires no refreshing is stored. Therefore, it is possible to efficiently reduce power consumption regardless of the percentage of the main memory 11 in use.

### (Third Embodiment)

A memory control apparatus according to a third embodiment of the present invention will now be described. In the third embodiment, unlike the first and second embodiments, all the data stored in the main memory 11 is refreshed. That is, determination as to whether or not target data requires refreshing is not performed. The memory control apparatus according to the third embodiment of the present invention performs a process of increasing the number of memory banks in which no data is stored by moving data stored in the main memory 11. This process allows the memory control apparatus to reduce the number of memory banks to be refreshed, thereby reducing power consumption caused by refreshing.

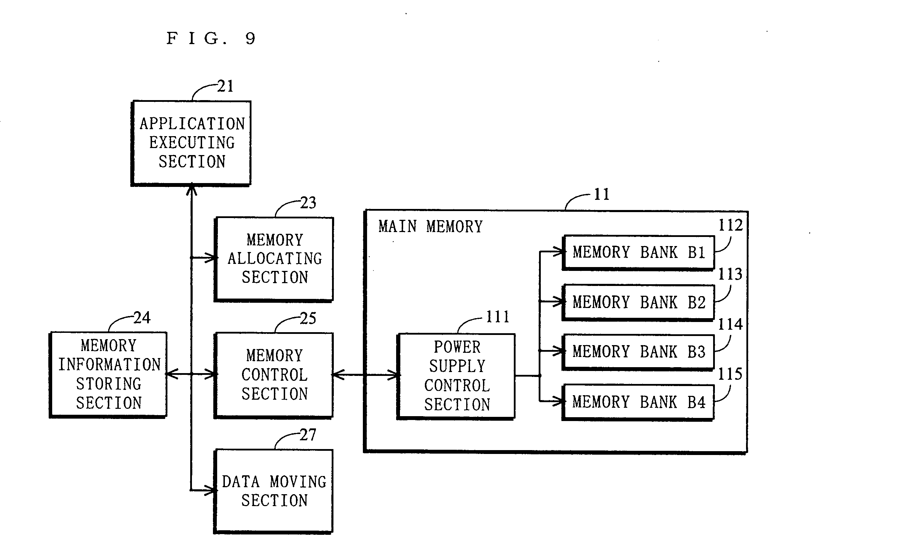

FIG. 9 is a block diagram illustrating a functional configuration of the memory control apparatus according to the third embodiment of the present invention. Note that the memory control apparatus according to the third embodiment is similar to the memory control apparatus according to the second embodiment of the present invention except that the memory control apparatus according to the third embodiment does not include the determination section 22 and the power detecting section 26. Differences between the third embodiment and the first and second embodiments are mainly described below with respect to elements illustrated in FIG. 9 and description about similarities between them is omitted.

In the third embodiment, the memory allocating section 23 may allocate any memory region to the target data. Specifically, in the third embodiment, the target data is written to any one of memory regions in the main memory 11 regardless of the purpose of using the target data. Note that the memory information storing section 24 is the same as those described in the first and second embodiments.

Similar to the first and second embodiments, the memory control section 25 provides the power supply control section 111 with an instruction as to which memory bank to refresh. In the third embodiment, the memory control section 25 specifies a memory bank(s) in which data is stored as belonging in the refresh region and specifies a memory bank(s) in which no data is stored as belonging in the non-refresh region. That is, in the third embodiment, whether or not to supply power for refreshing is not determined by the use of data stored in the memory banks but power is supplied to all the memory banks in which data are stored. The status showing whether or not data is stored with respect to each memory bank can be obtained by referring to the memory information stored in the memory information storing section 24.

The data moving section 27 moves storage locations of all data stored in a prescribed memory bank (the "movement source memory bank" which will be described later) to another memory bank (the "movement destination memory bank" which will also be described later). The data moving section 27 changes the contents of the memory information with respect to physical addresses of the moved data and correspondence between the physical addresses and logical addresses. A data moving process of the memory control apparatus according to the third embodiment of the present invention will be described below.

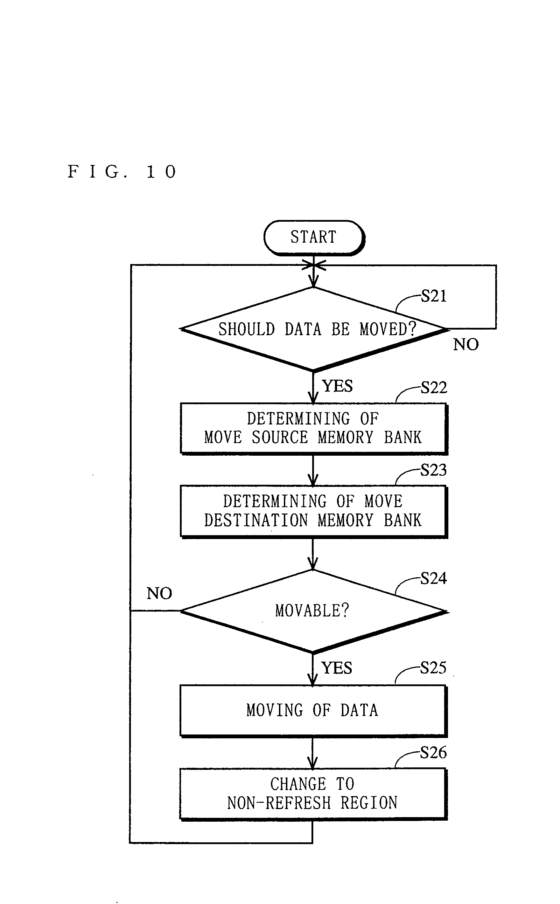

FIG. 10 is a flowchart illustrating the flow of a procedure performed by the memory control apparatus according to the third embodiment of the present invention. Firstly, at step S21, the data moving section 27 determines whether or not to move data. That is, whether or not it is time to move data is determined. Specifically, the data moving section 27 may determine that data should be moved at regular time intervals or when data is written to or deleted from the main memory 11. As a determination result of step S21, when it is determined that data should be moved, processing of step S22 is performed. On the other hand, as the determination result of step S21, when it is determined that data should not be moved, processing of step S21 is repeated. Specifically, the data moving section 27 stands by until the time to move data comes.

At step S22, the data moving section 27 determines the movement source memory bank from among four memory banks 112 to 115. For example, among the four memory banks 112 to 115, a memory bank having the smallest amount of stored data (a memory bank having a smallest memory region in which data is stored) is determined as the movement source memory bank. Note that a plurality of memory banks may be determined as the movement source memory banks.

Following step S22, at step S23, the data moving section 27 determines a movement destination memory bank. The movement destination memory bank is selected from among memory banks in which data are stored (i.e., memory banks which be long in the refresh region). For example, a memory bank which is not the movement source memory bank and has the smallest amount of stored data is determined as the movement destination memory bank. Note that a plurality of memory banks may be determined as the movement destinationmemorybank. At the following step S24, the datamoving section 27 determines whether or not data is movable. Specifically, it is determined whether or not the amount of data stored in the movement source memory bank (a sum of data amount of memory banks in the case where there are a plurality of movement source memory banks) is smaller than an available capacity of the movement destination memory bank (a sum of available capacities of memory banks in the case where there are a plurality of movement destination memory banks). As a result of step S24, when it is determined that data can be moved, processing of step S25 is performed. On the other hand, as the result of step S24, it is determined that it is not possible to move data, the procedure returns to step S21.

At step S25, the data moving section 27 moves storage locations of all data stored in the movement source memory bank to the movement destination memory bank. Further, the data moving section 27 updates the memory information stored in the memory information storing section 24 so as to reflect the data movement performed at step S25. At the following step S26, the memory control section 25 executes a change such that the movement source memory bank is specified as the non-refresh region. A single data moving process is completed at step S26, and the procedure returns to step S21.

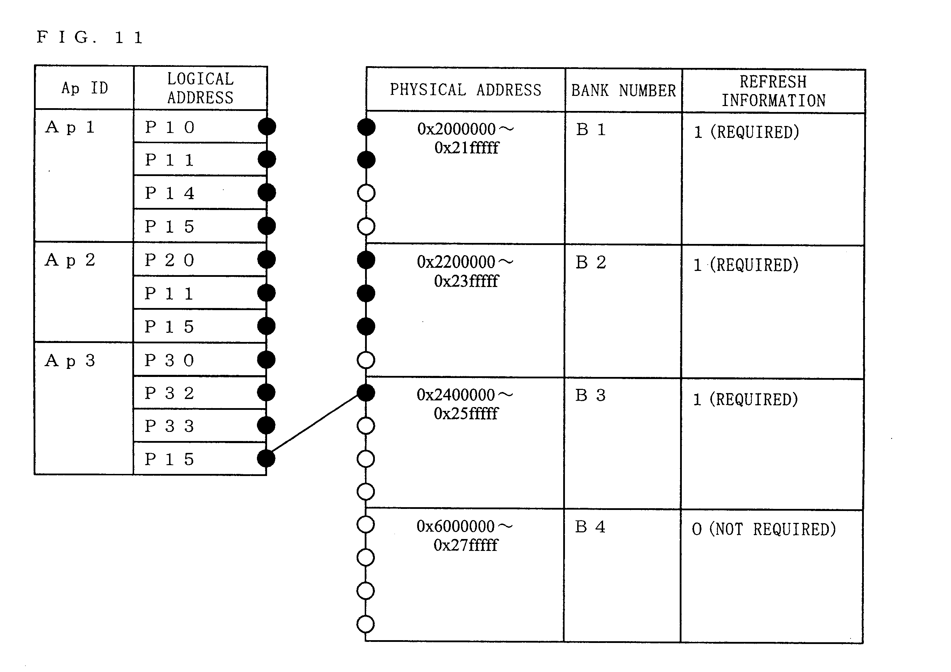

Next, a specific example of the data moving process according to the third embodiment of the present invention is described. FIG. 11 is a diagram illustrating the contents of memory information before data movement. In FIG. 11, in order to realize easy viewing of the figure, lines indicating correspondence between logical addresses and physical addresses are omitted with respect to data other than data targeted for the data moving process (data other than the data having the logical address "P15" used for the "Ap3" application) . Further, in the figure, the memory bank 115 having bank number B4 is specified as the non-refresh region and the other memory banks 112 to 114 are specified as belonging in the refresh region. A specific example of the data moving process performed under the above state is described above.

Firstly, at the state as illustrated in FIG. 11, when the time to move data comes, the data moving section 27 determines the movement source memory bank (step S22 of FIG. 10). In this case, the memory bank 114 having bank number B3 is determined as the movement source memory bank. Then, the data moving section 27 determines a movement destination memory bank (step S23 of FIG. 10). In this case, the memory bank 112 having bank number B1 is determined as the movement destination memory bank. As the result of this, the data having the logical address "P15" is moved to the memory bank 112 having bunk number B1.

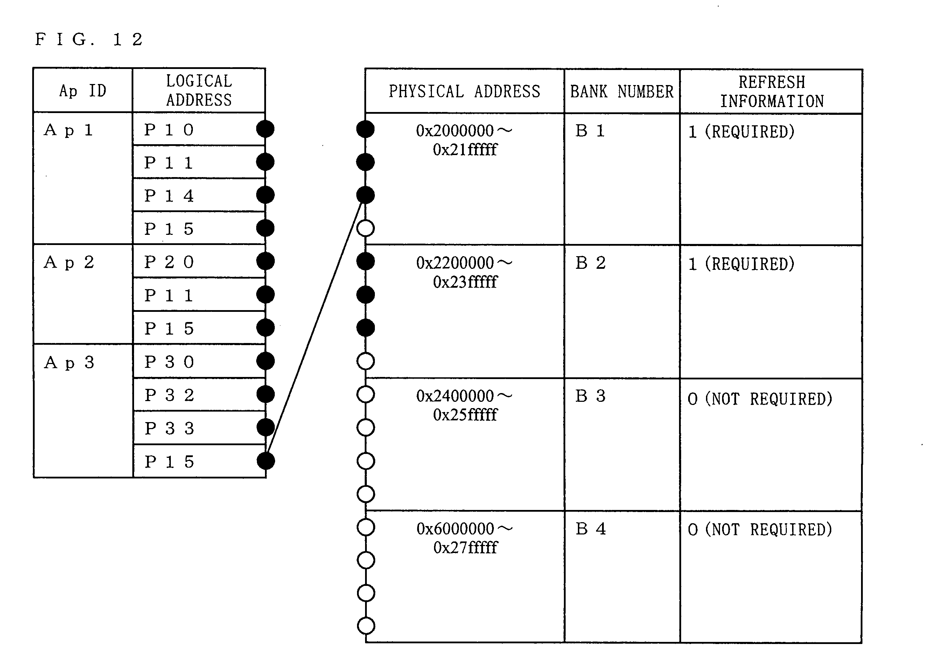

FIG. 12 is a diagram illustrating the contents of memory information after the data movement. As shown in FIG. 12, as the result of data movement, the memory bank 114 having bank number B3 has no data stored therein. Accordingly, the memory control section 25 executes a change such that the memory bank 114 is specified as the non-refresh region (step S26 of FIG. 10). As a result of this, comparing before and after the data movement with respect to the number of memory banks to be refreshed, one memory bank to be refreshed is decreased after the data movement, whereby it is possible to reduce power for refreshing.

As described above, according to the third embodiment, it is possible to reduce the number of memory banks which require refreshing by moving data. Thus, it is possible to reduce power for refreshing. Further, according to the third embodiment, the memory information which indicates correspondences between the logical addresses and the physical addresses is used, and therefore it is not necessary to notify the application of data movement. Since the application is not influenced by the data movement, it is not necessary to change settings of the application even when data is moved. Accordingly, it is not necessary to perform any process in conjunction with, for example, the change of the settings of the application, etc, and therefore the process for moving data can be readily performed. Furthermore, since it is not necessary to prepare an application in consideration of such a change, it is possible to realize a memory control apparatus applicable to more applications.

While the invention has been described in detail, the foregoing description is in all aspects illustrative and not restrictive. It is understood that numerous other modifications and variations can be devised without departing from the scope of the invention.

## Claims

1. A memory control apparatus for controlling a power supply for refreshing a memory (11), in which a storage region is divided into a plurality of unit regions (112-115), on a unit region-by-unit region basis, the apparatus comprising:
a determination section (22) for receiving an allocate request for allocating a memory region for storing data in the memory from an application and determining whether or not the data requires refreshing based on the allocate request;
a memory allocating section (23) for allocating a memory region in a first unit region to data having been determined to require refreshing and allocating a memory region in a second unit region which is different from the first unit region to data having been determined to require no refreshing; and
a memory control section (25) for specifying the first unit region as a refresh region for refreshing and specifying the second unit region as a non-refresh region which is prevented from being refreshed.

2. The memory control apparatus according to claim 1, wherein the memory allocating section specifies as the first unit region a unit region which has been specified as the refresh region at a last refresh and specifies as the second unit region a unit region which has been specified as the non-refresh region at the

3. The memory control apparatus according to claim 2, further comprising a data moving section (27) for moving a data storage location of data which is stored in the memory,
wherein in the case where the memory region is allocated to the data having been determined to require no refreshing, when there is no empty space in the non-refresh region, the memory allocating section specifies the unit region included in the refresh region as the second unit region, and
wherein in the case where the memory region within the unit region included in the refresh region is allocated to the data having been determined to require no refreshing, the data moving section moves the data already stored in the unit region to another unit region in the refresh region.

4. The memory control apparatus according to claim 3, further comprising a memory information storing section (24) for storing memory information in which a logical address for indicating the data storage location to the application is associated with a physical address indicating an actual data storage location in the memory with respect to each data stored in the memory,
wherein when the data is moved, the data moving section changes details of the memory information with respect to the physical address of the data and a correspondence between the physical address and the logical address.

5. The memory control apparatus according to claim 3, wherein the data moving section is realized when a CPU executes a prescribed program operation, the data moving section moving the data storage location when an amount of processing performed by the CPU per unit time is less than a prescribed amount.

6. The memory control apparatus according to claim 3, wherein
a processing priority is set among a plurality of applications capable of generating an allocate request, and
the data moving section moves the data storage location when the application having generated the allocate request has a lower processing priority than other applications.

7. The memory control apparatus according to claim 1, wherein the determination section stores information indicating a correspondence between the allocate request and information, which indicates whether or not data stored in the memory region allocated by the allocate request requires refreshing, and determines whether or not the data requires refreshing with reference to the information indicating the correspondence.

8. The memory control apparatus according to claim 1, wherein the determination section determines whether or not the data requires refreshing, depending on whether or not a time period for which data is required to be held is longer than a refresh cycle of the memory.

9. A memory control apparatus for controlling a power supply for refreshing a memory (11), in which a storage region is divided into a plurality of unit regions (112-115), on a unit region-by-unit region basis, the apparatus comprising:
a memory information storing section (24) for storing memory information in which a logical address for indicating a data storage location to an application is associated with a physical address indicating an actual data storage location in the memory with respect to each data stored in the memory,
a data moving section (27) for moving data storage locations of all data stored in at least one unit region of the memory to another unit region in which data is stored and changing details of the memory information with respect to physical addresses of moved data and a correspondence between the physical addresses and logical addresses; and
a memory control section (25) for specifying, based on the memory information, the unit region in which data is stored as a refresh region for refreshing and the unit region in which no data is stored as a non-refresh region which is prevented from being refreshed.

10. A memory control method for controlling a power supply for refreshing a memory (11), in which a storage region is divided into a plurality of unit regions (112-115), on a unit region-by-unit region basis, the method comprising the steps of:
receiving an allocate request for allocating a memory region for storing data in the memory from an application and determining whether or not the data requires refreshing based on the allocate request;
allocating a memory region within a first unit region to data having been determined to require refreshing and a memory region within a second unit region which is different from the first unit region to data having been determined to require no refreshing; and
specifying the first unit region as a refresh region for refreshing and specifying the second unit region as a non-refresh region which is prevented from being refreshed.

11. A memory control method for controlling a power supply for refreshing a memory (11), in which a storage region is divided into a plurality of unit regions (112-115), on a unit region-by-unit region basis, the method comprising the steps of:
prestoring memory information in which a logical address for indicating a data storage location to an application is associated with a physical address indicating an actual data storage location in the memory with respect to each data stored in the memory;
moving all data stored in at least one unit region of the memory to another unit region in which data is stored and changing details of the memory information with respect to physical addresses of moved data and a correspondence between the physical addresses and logical addresses; and
specifying, based on the memory information, the unit region in which data is stored as a refresh region for refreshing and the unit region in which no data is stored as a non-refresh region which is prevented from being refreshed.

12. A computer readable program for allowing a computer including a memory (11) in which a storage region is divided into a plurality of unit regions (112-115) to execute a memory control method of claim 10.

13. A computer readable program for allowing a computer including a memory (11) in which a storage region is divided into a plurality of unit regions (112-115) to execute a memory control method of claim 11.
